# EUROPEAN PATENT APPLICATION

(11) **EP 3 809 007 A1**
(43) Date of publication of application: **21.04.2021**
(21) Application number: 20199721.0
(22) Date of filing: 01.10.2020
(51) Int. Cl.: F16D 13/75

(54) **VEHICLE CLUTCHES**

(30) Priority: 18.10.2019 GB 201915165
(71) Applicant: Raicam Driveline S.r.l., 12084 Mondovi (CN) (IT)
(72) Inventor: Ribichini, Andrea, 60031 Castelplanio (IT); Fiorentini, Riccardo, 60030 Maiolati Spontini, (IT)
(74) Representative: Morrall, Roger

(57) **Abstract**

A motor vehicle clutch cover assembly has a clutch cover for securing to a flywheel when in use and a pressure plate biased towards the flywheel by a diaphragm spring mounted on the cover, a clutch drive disc for clamping between the pressure plate and the associated flywheel, and a ramp type wear adjuster is located in the thrust path between the diaphragm spring and the pressure plate to compensate for wear of the drive disc. The wear adjuster has a first ramp means nearest to the pressure plate and a second ramp means in contact with the first ramp means but further away from the pressure plate and also in contact with the diaphragm spring, the first and second ramp means being relatively rotatable about the axis of rotation of the pressure plate by an adjuster spring means to increase the combined effective thickness of the ramp means and hence maintain the travel of the diaphragm spring substantially constant as the clutch disc wears. The wear adjuster also includes a wear sensor in the form of pin means carried in bore means in the pressure plate and held relative to the pressure plate by a friction grip, one end of the pin means engages an abutment member carried by the clutch cover when the clutch is engaged and the other end of the pin means contacts a hold down member connected with the second ramp mean. The pin means being pushed through the bore as the clutch disc wears which loads a lift spring means and after sufficient wear of the clutch disc has occurred, when the clutch is released, the loading in the lift spring means biases the ramp means apart to allow a gap to occur between the first and second ramp means which is dependent on clutch drive disc wear, so that the adjuster spring means can rotate the two ramp means relative to each other and thus increase the combined effective thickness of the ramp means to maintain the position and thus the inclination (angle) of the diaphragm spring substantially constant as the clutch disc wears.

## Description

This invention relates to vehicle clutches and in particular to such clutches which include a wear adjuster and which transmit drive from a vehicle engine to an associated vehicle transmission.

The Applicant's own European patents 2778458 and 3184838 describe and claim a friction clutch for a motor vehicle in which the clutch has a pressure plate biased towards an associated flywheel by a diaphragm spring, a clutch drive disc is provided for clamping between the pressure plate and the associated flywheel, and a ramp type wear adjuster is located in the thrust path between the diaphragm spring and the pressure plate to compensate for wear of the drive disc. This wear adjuster comprises a first ramp means nearest to the pressure plate and a second ramp means in contact with the first ramp means but further away from the pressure plate and also in contact with the diaphragm spring, the first and second ramp means being relatively rotatable about the axis of rotation of the pressure plate by an adjuster spring means to increase the combined effective thickness of the ramp means and hence maintain the travel of the diaphragm spring substantially constant as the clutch disc wears. The wear adjuster also including a wear sensor in the form of pin means carried in bore means in the pressure plate and held relative to the pressure plate by a friction grip. One end of the pin means engages an abutment surface on the flywheel when the clutch is engaged and the other end of the pin means contacts a hold down member connected with the second ramp means. The pin means is pushed through the bore means as the clutch disc wears which loads a lift spring means and after sufficient wear of the clutch disc has occurred the loading in the lift spring means biases the ramp means apart to allow a gap to occur between the first and second ramp means which is dependent on clutch drive disc wear, so that the adjuster spring means can rotate the two ramp means relative to each other and thus increase the combined effective thickness of the ramp means to maintain the position and thus the inclination (angle) of the diaphragm spring substantially constant as the clutch disc wears.

Whilst this type of friction clutch operates efficiently it has a few manufacturing and delivery issues which increase its cost of production. The principal problem is the provision of an accurately machined abutment surface for contact by the sensor pin.

The flywheel is typically formed from cast iron and all the essential contact areas namely the friction surface for contact by the clutch disc, the fixing flange for the clutch cover which supports the diaphragm spring, the ring gear mounting flange and the crank shaft mounting palm are all machined by turning but since the pin abutment surface must be located outside the outer diameter of the friction surface an additional machining operation is required for this surface. Also, as typically three sensor pins are used in each clutch, these sensor pins which protrude from the clutch housing are quite fragile and liable to damage during packaging and shipment to the place of assembly into the vehicle.

It is an object of the present invention to provide an improved form of vehicle clutch cover assembly which is simple in construction and reliable in operation and overcomes the above machining and damage problems.

Thus according to the present invention there is provided a motor vehicle clutch cover assembly comprising a clutch cover for securing to a flywheel when in use and a pressure plate biased towards the flywheel by a diaphragm spring mounted on the cover, a clutch drive disc is provided for clamping between the pressure plate and the associated flywheel, and a ramp type wear adjuster is located in the thrust path between the diaphragm spring and the pressure plate to compensate for wear of the drive disc, the wear adjuster comprises a first ramp means nearest to the pressure plate and a second ramp means in contact with the first ramp means but further away from the pressure plate and also in contact with the diaphragm spring, the first and second ramp means being relatively rotatable about the axis of rotation of the pressure plate by an adjuster spring means to increase the combined effective thickness of the ramp means and hence maintain the travel of the diaphragm spring substantially constant as the clutch disc wears, the wear adjuster also including a wear sensor in the form of pin means carried in bore means in the pressure plate and held relative to the pressure plate by a friction grip, the assembly being characterised in that one end of the pin means engages an abutment member carried by the clutch cover when the clutch is engaged and the other end of the pin means contacts a hold down member connected with the second ramp means, the pin means being pushed through the bore means as the clutch disc wears which loads a lift spring means and after sufficient wear of the clutch disc has occurred, when the clutch is released, the loading in the lift spring means biases the ramp means apart to allow a gap to occur between the first and second ramp means which is dependent on clutch drive disc wear, so that the adjuster spring means can rotate the two ramp means relative to each other and thus increase the combined effective thickness of the ramp means to maintain the position and thus the inclination (angle) of the diaphragm spring substantially constant as the clutch disc wears.

The provision of the abutment member carried by the cover removes the need to machine this abutment surface on the flywheel itself this simplifying production and the abutment member can also be arrange to protect the sensor pin means during packaging and shipment of the clutch to the place of assembly into the vehicle.

The sensor pin means may be supported from a lug portion of the pressure plate which projects radially beyond the surface of the associated flywheel contacted by the clutch drive disc and the clutch cover may have a raised pocket to accommodate the sensor pin, hold down member and lug with the sensor pin abutment member within the pocket. The sensor pin abutment member may be in the form of a metal strip which extends across the pocket. The strip may be clamped between the cover and flywheel by bolts which secure the cover to the flywheel.

In an alternative arrangement the sensor pin abutment member is generally Z shaped and attached to the cover at one end only.

Alternatively the sensor pin abutment member may be formed integrally with the cover and may be bent into the pocket for engagement by the sensor pin means.

As described and claimed in the Applicant's earlier European patent 2778458 the lift spring means may be wrapped around the sensor pin means.

The friction grip may be provided by a self-griping washer carried on the pressure plate whose inner periphery grips the pin means.

Lift straps may be provided which act on the pressure plate to lift the pressure plate away from the drive disc when the clutch is released and the lift straps may lie over the gripping washer to hold the washer in a recess surrounding the bore in the pressure plate.

Alternatively, as described in the Applicant's earlier European patent 3184838, the lift spring means may be provided by making the hold down member resilient so that as the clutch drive disc wears the resilient hold down member is bent to provide the lifting force for separating the first and second ramp means to allow them to rotate to thus increase the combined effective thickness of the ramp means to maintain the position and thus the inclination (angle) of the diaphragm spring substantially constant as the clutch disc wears.

To provide a balanced set up a plurality of sensor pin means are provided at circumferentially spaced locations on the pressure plate.

The present invention will now be described, by way of example only, with reference to the accompanying drawings in which:-
Figure 1 shows a perspective view of a clutch cover assembly in accordance with the present invention mounted on a vehicle flywheel;
Figure 2 shows the clutch cover assembly of Figure 1 with the abutment member for the sensing pin detached in an exploded position;
Figure 3 shows a sectional view through the abutment member and sensing pin arrangement of Figure 1;
Figure 4 shows a sectional view at right angles to the section of Figure 3;
Figure 5 shows a perspective view of a second form of clutch cover assembly in accordance with the present invention mounted on a vehicle flywheel;
Figure 6 shows the clutch cover assembly of Figure 5 with a different abutment member for the sensing pin detached in an exploded position;
Figure 7 shows a sectional view through the abutment member and sensing pin arrangement of Figure 5;
Figure 8 shows a perspective view of a further form clutch cover assembly in accordance with the present invention mounted on a vehicle flywheel;
Figure 9 shows a cut-away view of part of the integral abutment member and sensing pin arrangement of Figure 8, and
Figure 10 shows an exploded view of an adjuster ramp arrangement used in the clutch cover assembly of the present invention.

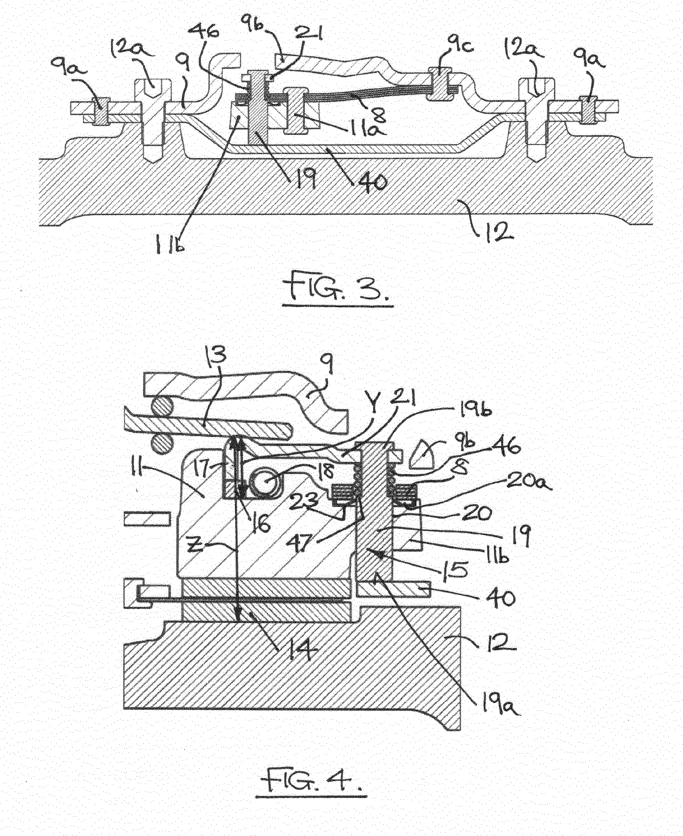

Referring to the drawings, a vehicle clutch cover assembly 10 in accordance with the present invention has a pressure plate 11 biased towards an associated flywheel 12 by a diaphragm spring 13 supported from a clutch cover 9 which is bolted to the flywheel 12 at 12a. A clutch drive disc 14 is provided for clamping between the pressure plate 11 and the flywheel 12 and a ramp type wear adjuster 15 is located in the thrust path between the diaphragm spring 13 and the pressure plate 11 to compensate for wear of the drive disc 14. Lift straps 8 (see Figures 3 and 4) are provided at circumferentially spaced locations between the cover 9 and the pressure plate 11 to ensure that the pressure plate 11 lifts away from the flywheel when the clutch is disengaged.

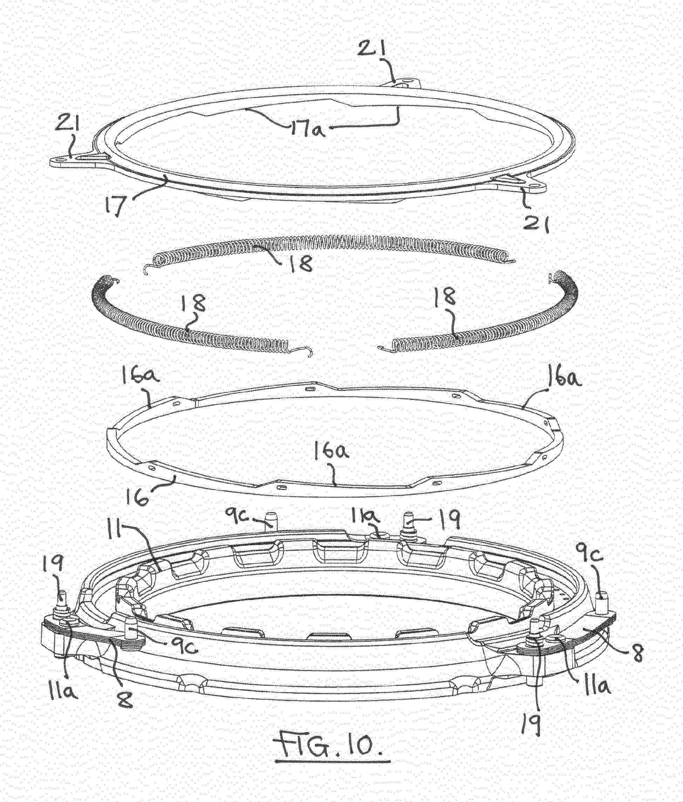

The wear adjuster 15 comprises a first ramp means in the form of a ring 16 nearest to the pressure plate 11 and a second ramp means in the form of a second ring 17 which is in contact with the first ring 16 but further away from the pressure plate and is also in contact with the diaphragm spring 13. As can best be seen from Figure 10, the first and second rings 16 and 17 are relatively rotatable about the axis of rotation of the pressure plate by adjuster spring means in the form of coils springs 18 and the rings 16 and 17 have contacting ramp surfaces 16a and 17a respectively which cooperate when the rings are rotated relative to each other by springs 18 to increase the combined effective thickness (see Y in Figure 4) of the rings to adjust the clutch for wear of the disc 14 as will be explained below.

The wear adjuster also includes a wear sensor in the form of a sensor pin 19 which extends through a bore 20 in the pressure plate 11. A self-gripping washer 20a surrounds each pin 19. The inner periphery of each washer 20a grips the associated pin 19 to provide frictional resistance to the movement of pin 19 in bore 20. The washer 20a is housed in a recess 23 in the pressure plate 11. The washer is held in its bore by the lift straps 8 which lie over the washer and are rivetted to the pressure plate 11 at 11a and to the cover 9 at 9c.

In accordance with the present invention one end 19a of the pin 19 engages an abutment member 40 when the clutch is engaged (see Figures 3 and 4) and the pin is pushed through the bore 20 against the friction grip provided by washer 20a as the friction disc wears14. The other end of the pin 19 has a head portion 19b which is rivet to or otherwise secured to an end portion of a hold down member 21 which is formed integrally with, or secured to, second ring 17.

A coil lift spring 46 surround the sensor pin 19 and acts between the hold down member 21 and a shoulder 47 on the pin 19.

In a typical construction there will be three sensor pins 19 positioned at 120 degree intervals around the pressure plate 11 to provide a balance arrangement. For example, each sensor pin 19 is supported from a lug portion 11b of the pressure plate which projects radially beyond the flywheel surface contacted by the clutch drive disc and the clutch cover has a raised pocket 9b to accommodate the sensor pin 19, hold down member 21 and lug 11b with the sensor pin abutment member 40 extending across the pocket. The abutment member 40 is rivetted or otherwise secured to the cover 9 at 9a thus providing protection for the associated sensor pin 19 during packaging and shipment to the place of assembly into the vehicle in which it is to be used. The abutment member 40 is clamped between the cover 9 and flywheel 12 by bolts 12a. This enables the height of pocket 9b to be lower by the thickness of the abutment member 40 thus improving the rigidity of the cover 9.

When the clutch is engaged by the diaphragm spring 13 there is a solid metal thrust path from diaphragm spring 13 via ramp rings 16 and 17 to pressure plate 11.

As the clutch disc 14 wears, the pins 19 are pushed through the bores 20 to load the lift springs 46 so that, after sufficient wear has occurred, when the clutch is released, the loading of the lift spring means due to clutch disc wear, overcomes the effect of lift straps 8 (which tend to bias the ramp rings 16 and 17 towards each other) and biases the ramp rings 16 and 17 apart to allow a gap to occur between the ramp rings 16 and 17. This gap is dependent on clutch disc wear and allows the adjuster springs 18 to rotate the two ramp rings 16 and 17 relative to each other and thus increase the combined effective thickness Y of the ramp rings 16 and 17 so that the distance Z (see Figure 4) of the diaphragm spring from the flywheel remains the same so that the position and inclination (angle) of the diaphragm spring during operation of the clutch remains substantially constant as the clutch disc wears.

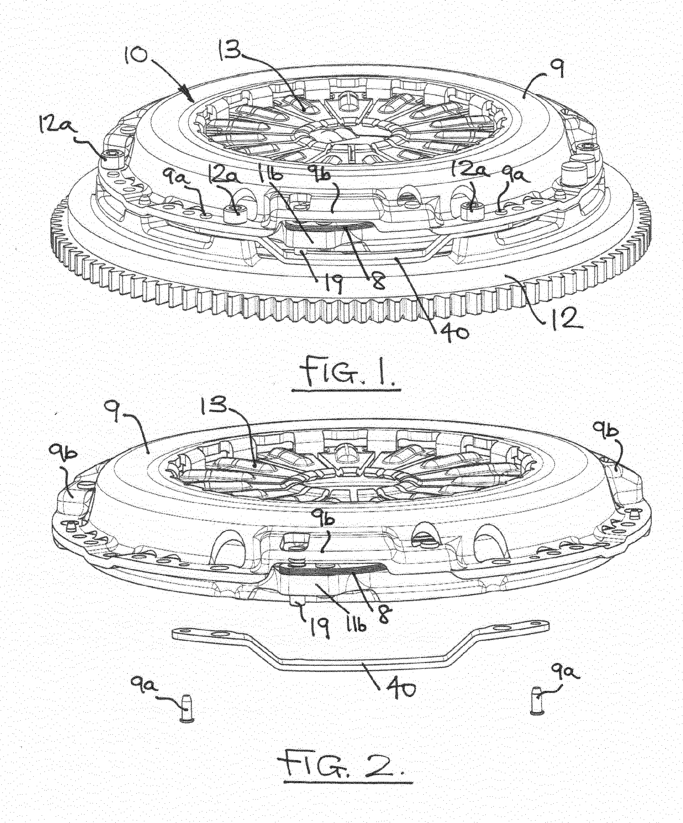

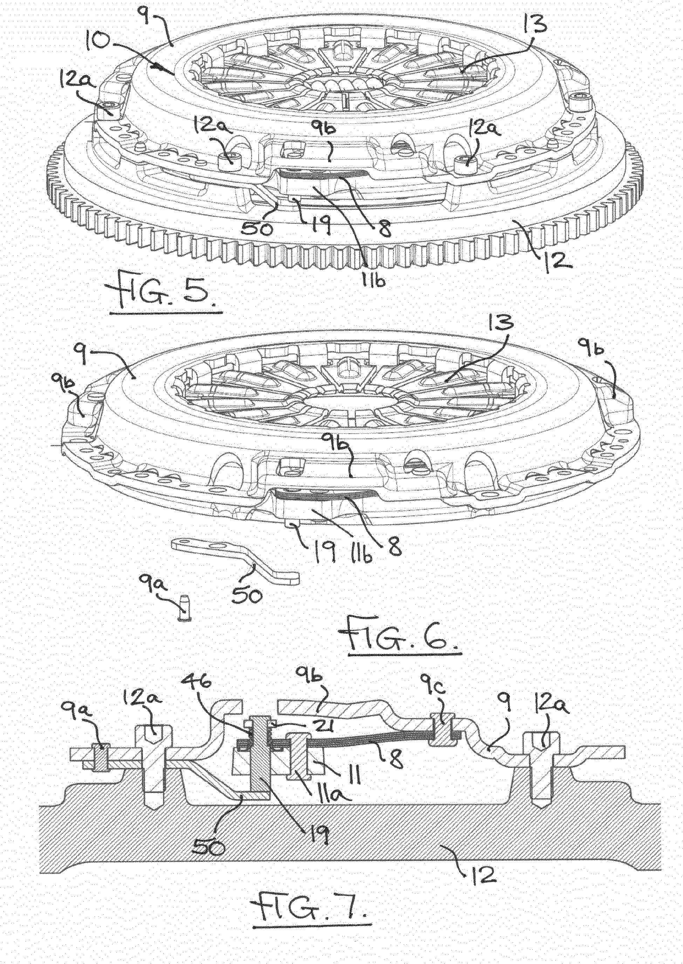

Figures 5 to 7 show a second embodiment of the invention in the same basic positions as shown in Figures 1 to 3. In this embodiment it is only the abutment member 50 which is different. In this construction the abutment member is generally Z shaped and is attached at one end only to the cover 9 by a rivet 9a. The operation of the sensing pin 19 on abutment member 50 is the same as that described above in relation to the abutment member 40 of Figures 1 to 4.

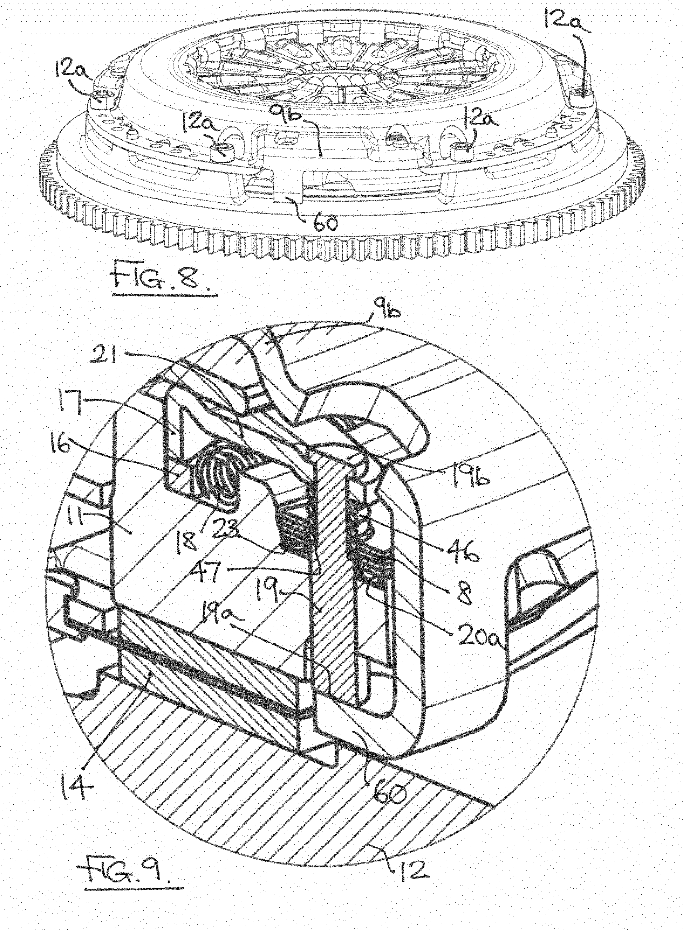

Figures 8 and 9 show a third embodiment of the invention in which the abutment member 60 is formed integrally with the cover 9 and is bent into the pocket 9b for engagement by the sensor pin 19. Again the operation of the sensing pin 19 on abutment member 60 is the same as that described above in relation to the abutment member 40 of Figures 1 to 4.

Alternatively, as described in the Applicant's earlier European patent 3184838, the lift spring means may be provided by making the hold down member resilient so that as the clutch drive disc wears the resilient hold down member is bent to provide the lifting force for separating the first and second ramp means to allow them to rotate to thus increase the combined effective thickness of the ramp means to maintain the position and thus the inclination (angle) of the diaphragm spring substantially constant as the clutch disc wears.

As can be seen from the above, the present invention provides an improved clutch cover assembly which has a simple but effective wear adjuster mechanism which is also reliable in operation and cheap to produce due to the use of the sensor pin abutment members carried by the cover. These abutment members also provide an improved level of protection for the associated sensor pins during packaging and shipment to the place of assembly into the vehicle in which the cover assembly is to be used.

## Claims

1. A motor vehicle clutch cover assembly (10) comprising a clutch cover (9) for securing to a flywheel (12) when in use and a pressure plate (11) biased towards the flywheel by a diaphragm spring (13) mounted on the cover, a clutch drive disc (14) for clamping between the pressure plate (11) and the associated flywheel (12), and a ramp type wear adjuster (15) located in the thrust path between the diaphragm spring and the pressure plate to compensate for wear of the drive disc (14), the wear adjuster (15) comprises a first ramp means (16) nearest to the pressure plate (11) and a second ramp means (17) in contact with the first ramp means (16) but further away from the pressure plate and also in contact with the diaphragm spring (13), the first and second ramp means (16,17) being relatively rotatable about the axis of rotation of the pressure plate by an adjuster spring means (18) to increase the combined effective thickness of the ramp means (16,17) and hence maintain the travel of the diaphragm spring (13) substantially constant as the clutch disc (14) wears, the wear adjuster (15) also including a wear sensor in the form of pin means (19) carried in bore means (20) in the pressure plate (11) and held relative to the pressure plate by a friction grip (20a), the assembly being **characterised in that** one end (19a) of the pin means (19) engages an abutment member (40) carried by the clutch cover (9) when the clutch is engaged and the other end (19b) of the pin means (19) contacts a hold down member (21) connected with the second ramp means (17), the pin means (19) being pushed through the bore means (20) as the clutch disc (14) wears which loads a lift spring means (46) and after sufficient wear of the clutch disc (14) has occurred, when the clutch is released, the loading in the lift spring means (46) biases the ramp means (16,17) apart to allow a gap to occur between the first and second ramp means (16,17) which is dependent on clutch drive disc wear, so that the adjuster spring means (18) can rotate the two ramp means (16,17) relative to each other and thus increase the combined effective thickness (Y) of the ramp means (16,17) to maintain the position (Z) and thus the inclination (angle) of the diaphragm spring substantially constant as the clutch disc (14) wears.

2. A clutch cover assembly according to claim 1 **characterised in that** the sensor pin means (19) is supported from a lug portion (11b) of the pressure plate (11) which projects radially beyond the flywheel surface contacted by the clutch drive disc (14) and the clutch cover (9) has a raised pocket (9b) to accommodate the sensor pin (19), hold down member (21) and lug (11b) with the sensor pin abutment member (40) within the pocket (9b).

3. A clutch cover assembly according to claim 2 **characterised in that** the sensor pin abutment member (40) is a metal strip which extends across the pocket (9b), the strip being clamped between the cover (9) and flywheel (12) by bolts (12a) which secure the cover (9) to the flywheel (12) when in use.

4. A clutch cover assembly according to claim 2 **characterised in that** the abutment member (50) is generally Z shaped and attached to the cover (9) at one end only.

5. A clutch cover assembly according to claim 2 **characterised in that** the sensor pin abutment member (60) is formed integrally with the cover (9) and is bent into the pocket (9b) for engagement by the sensor pin means (19).

6. A clutch cover assembly according to any one of claims 1 to 5 **characterised in that** the lift spring means (46) is wrapped around the sensor pin means (19).

7. A clutch cover assembly according to any one of claims 1 to 6 **characterised in that** the friction grip is provided by a self-griping washer (20a) carried on the pressure plate (11) whose inner periphery grips the pin means (19).

8. A clutch cover assembly according to claim 7 **characterised in that** lift straps (8) are provided which act on the pressure plate (11) to lift the pressure plate away from the drive disc (14) when the clutch is released and the lift straps (8) lie over the gripping washer (20a) to hold the washer in a recess (23) surrounding the bore (20) in the pressure plate (11).

9. A clutch cover assembly according to any one of claims 1 to 8 **characterised in that** the lift spring means is provided by making the hold down member resilient so that as the clutch drive disc wears the resilient hold down member is resiliently bent to provide the lifting force for separating the first and second ramp means to allow them to rotate to thus increase the combined effective thickness of the ramp means to maintain the position and inclination (angle) of the diaphragm spring substantially constant as the clutch disc wears.

10. A clutch cover assembly according to any one of claims 1 to 9 **characterised in that** to provide a balanced set up a plurality of sensor pin means (19) are provided at circumferentially spaced locations on the pressure plate (11).

11. A clutch cover assembly according to any one of claims 1 to 10 **characterised in that** the adjuster spring means (18) comprises coil springs which act circumferentially between the two ramp means (16,17).
